(19) Europäisches Patentamt
European Patent Office
Office européen des brevets

(11) Publication number : **0 572 176 A1**

# (12) EUROPEAN PATENT APPLICATION

(21) Application number : **93303924.0**

(51) Int. Cl.[5] : **C09J 163/00,** C08G 65/32

(22) Date of filing : **20.05.93**

(30) Priority : **29.05.92 US 889879**

(43) Date of publication of application :
**01.12.93 Bulletin 93/48**

(84) Designated Contracting States :
**DE FR GB**

(71) Applicant : **TEXACO CHEMICAL COMPANY**
**3040 Post Oak Boulevard**
**Houston, Texas 77056 (US)**

(72) Inventor : **Waddill, Harold George**
**8712 Bluegrass**
**Austin, Texas 78759 (US)**
Inventor : **Cuscurida, Michael**
**3543 Greystone No. 1056**
**Austin, Texas 78731 (US)**
Inventor : **Grigsby, Robert Allison, Jr.**
**7404 Fireoak Drive**
**Austin, Texas 78761 (US)**
Inventor : **Zimmerman, Robert LeRoy**
**4202 Cordova**
**Austin, Texas 78759 (US)**

(74) Representative : **Brock, Peter William et al**
**URQUHART-DYKES & LORD 91 Wimpole Street**
**London W1M 8AH (GB)**

## (54) Epoxy adhesives.

(57) Curable epoxy resins comprising

A. An epoxy resin component comprising a vicinal polyepoxide having an average of at least 1.8 reactive 1,2-epoxy groups per molecule ; and

B. A curative component comprising a polyamine curing agent

exhibit high lap shear strength and peel strength when the curative component also includes 2 to 30 % by weight, based on vicinal polyepoxide of a hindered polyetherpolyamine adhesion enhancer obtainable by reacting a polyol having two or more hydroxyl groups with an effective amount of a long chain alkyl epoxide to give an at least partially hindered intermediate having hydroxyl terminations ; and aminating at least one of the hydroxyl terminations on the intermediate to primary amino groups.

Preferably the hindered polyetherpolyamine has the structure :

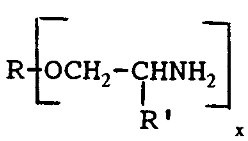

or

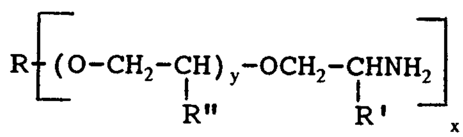

wherein R is a central moiety from a polyol ; at least one R' is a straight or branched alkyl group having at least 10 carbon atoms, the balance being hydrogen, methyl or ethyl ; R" is hydrogen or an alkyl group having 1 or 2 carbon atoms ; x is 2 or more and y is 20 to 80.

EP 0 572 176 A1

Jouve, 18, rue Saint-Denis, 75001 PARIS

This invention relates to an epoxy resin adhesive formulation.

Epoxy resins constitute a broad class of polymeric materials having a wide range of physical properties. The curable resins have epoxide groups, which are cured by reaction with certain catalysts or curing agents to provide cured epoxy resin compositions with certain desirable properties.

The most common epoxy resins are condensation products of epichlorohydrin and Bisphenol A. These resins can be cured with conventional curing agents, such as polyamines, polycarboxylic acids, anhydrides and Lewis acids. Bisphenol A-based epoxy compositions have good adhesive properties when cured, but many are inherently stiff and brittle, so that their use is limited to applications where peel forces are not significant.

It has been found that plasticizers can be added to an epoxy resin adhesive system to improve flexural strength. Typical methods of plasticization include the addition of flexibilizing aliphatic amines to the curing agent, addition of aminated or carboxylated rubbers to the system, addition of carboxy-terminated polyesters, addition of organic hydroxyl containing compounds and the addition of epoxidized oils.

H.N. Vazirani [Adhesives Age 23, No. 10, p. 31] describes reaction products of liquid epoxy resins with a polyoxypropylene diamine which are useful in flexibilizing adhesive systems.

There is a need in the art for an epoxy system that produces a flexible cured resin with good adhesive properties.

US-A-3654370 describes curing agents for epoxy resins having the formula:

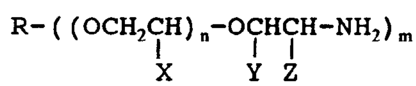

wherein R is the nucleus of an oxyalkylation susceptible polyhydric alcohol having 2 to 12 carbon atoms and 2 to 8 hydroxyl groups, Z is an alkyl group having 1 to 18 carbon atoms, X and Y are hydrogen or Z, n is 0 to 50 and m is 2 to 8, corresponding to the number of hydroxyl groups in the polyhydric alcohol.

US-A-3236895 and US-A-3462393 describe a series of solid or liquid amine compounds which have utility particularly in curing epoxy resins. The amine compounds have the general formula:

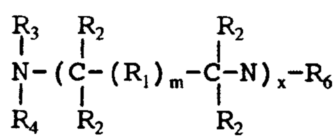

wherein the R groups are selectively defined as hydrogen, alkyl oxyalkylene and x and m are defined numbers.

US-A-4528345 teaches a method for making weather-resistant epoxy coatings involving prereacting a cycloaliphatic diepoxide resin with aminoethylpiperazine, or a mixture of aminoethylpiperazine and polyoxyalkylenepolyamine in an amount which is balanced to give the maximum level of primary amine reaction without yielding an excessively viscous reaction product. The prereacted product is reacted with a polyoxyalkylenepolyamine curing agent, and an accelerator.

US-A-3875072 teaches an accelerator for curing epoxy resins comprising piperazine and an alkanolamine in a weight ratio of 1:8 to 1:1.

US-A-4195153 teaches a non-crystallizing accelerator for curing epoxy resins comprising N-aminoethylpiperazine and triethanolamine.

US-A-4189564 teaches a non-crystallizing accelerator for curing epoxy resins comprising 65 to 80 wt% triethanolamine, 10 to 20 wt% piperazine and 5 to 10 wt% N-aminoethylpiperazine. This is sold commercially as Accelerator 399 by Texaco Chemical Co., and is synergistic for accelerating the curing of a polyglycidyl ether of a polyhydric phenol cured with a polyoxyalkylene polyamine at ambient or elevated temperatures. Such amines include polyoxypropylene diamines of the formula:

$$NH_2CH(CH_3)CH_2[OCH_2CH(CH_3)]_xNH_2$$

wherein x is 2 to 40.

These diamines may be synthesized according to US-A-3654370, using a nickel, copper and chromium catalyst for aminating polyols. These diamines were originally taught in US-A-3462393.

US-A-3496138 teaches curing diepoxides with polyglycol diamines, derived from ethylene glycol, diethylene glycol and polyethylene glycol.

The present invention provides a curable epoxy resin component comprising

A. An epoxy resin component comprising a vicinal polyepoxide having an average of at least 1.8 reactive 1,2-epoxy groups per molecule; and

B. A curative component comprising a polyamine curing agent.

According to the invention, the curative component also includes 2 to 30 % by weight, based on vicinal polyepoxide, of a hindered polyetherpolyamine adhesion enhancer obtainable by reacting a polyol having two or more hydroxyl groups with an effective amount of a long chain alkyl epoxide to give an at least partially hindered intermediate having hydroxyl terminations; and

aminating at least one of the hydroxyl terminations on the intermediate to primary amino groups.

Preferably, the hindered polyetherpolyamine has the structure:

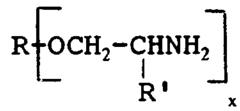

or

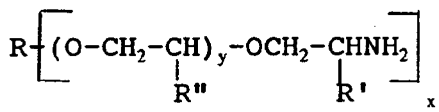

wherein R is a central moiety from a polyol; at least one R' is a straight or branched alkyl group having at least 10 carbon atoms, the balance being hydrogen, methyl or ethyl; R" is hydrogen or an alkyl group having 1 or 2 carbon atoms; x is 2 or more and y is 20 to 80.

These hindered polyetherpolyamines are described in our prior European Application No. 93302532.2.

The present invention also provides cured epoxy resin compositions obtained by curing the compositions defined above, preferably at a temperature of 0 to 45°C.

This system demonstrates a rapid cure, high lap shear strength, and relatively high peel strength. These properties are effective for use as adhesives. The adhesion enhancer has a preferred molecular weight of 3000 to 5000.

Generally the vicinal polyepoxide containing compositions which may be used according to the invention are organic materials having an average of at least 1.8 reactive 1,2-epoxy groups per molecule. These polyepoxide materials can be monomeric or polymeric, saturated or unsaturated, aliphatic, cycloaliphatic, aromatic or heterocyclic, and may be substituted if desired with other substituents besides the epoxy groups, e.g., hydroxyl groups, ether radicals or aromatic halogen atoms. These vicinal polyepoxide containing compounds typically have an epoxy equivalent weight of 150 to 250. Preferably the base resin, which has an epoxy equivalent weight of from 175 to 195, is derived from condensing epichlorohydrin with 2,2-bis(p-hydroxyphenyl propane) (i.e. Bisphenol A) to form 2,2-bis[(p-2,3-epoxy propoxy)phenyl] propane.

Preferred polyepoxides are glycidyl ethers prepared by epoxidizing the corresponding allyl ethers or reacting, by known procedures, a molar excess of epichlorohydrin and an aromatic polyhydroxy compound, i.e., Bisphenol A, novolac or resorcinol. The epoxy derivatives of methylene or isopropylidene bisphenols (Bisphenol A) are especially preferred.

A widely used class of polyepoxides which is useful according to the present invention includes the resinous epoxy polyethers obtained by reacting an epihalohydrin, such as epichlorohydrin, with either a polyhydric phenol or a polyhydric alcohol. Typically the epoxy resins have an average of at least 1.8 reactive, 1,2-epoxy groups per molecule. An illustrative, but by no means exhaustive, listing of suitable dihydric phenols includes:
Bisphenol A,
2,4'-dihydroxydiphenylethylmethane,
3,3'-dihydroxydiphenyldiethylmethane,
3,4'-dihydroxydiphenylmethylpropylmethane,
2,3'-dihydroxydiphenylethylphenylmethane,
4,4'-dihydroxydiphenylpropylphenylmethane,
4,4'-dihydroxydiphenylbutylphenylmethane,
2,2'-dihydroxydiphenylditolylmethane, and
4,4'-dihydroxydiphenyltolylmethylmethane.

Other polyhydric phenols which may also be co-reacted with an epihalohydrin to provide these epoxy polyethers are such compounds as resorcinol, hydroquinone, and substituted hydroquinones, e.g., methylhydroquinone.

Among the polyhydric alcohols which can be co-reacted with an epihalohydrin to provide these resinous epoxy polyethers are such compounds as ethylene glycol, propylene glycols, butylene glycols, pentane diols, bis-(4-hydroxycyclohexyl)dimethylmethane, 1,4-dimethylolbenzene, glycerol, 1,2,6-hexanetriol, trimethylolpropane, mannitol, sorbitol, erythritol, pentaerythritol, their dimers, trimers and higher polymers, e.g., polyethylene glycols, polypropylene glycols, triglycerol or dipentaerythritol, polyallyl alcohol, polyhydric thioethers, such as 2,2'-,3,3'-tetrahydroxydipropylsulphide, mercapto alcohols such as monothioglycerol or dithioglycerol, polyhydric alcohol partial esters, such as monostearin or pentaerythritol monoacetate, and halogenated polyhydric alcohols such as the monochlorohydrins of glycerol, sorbitol or pentaerythritol.

Another class of polymeric polyepoxides which can be amine cured in accordance with the present invention includes the epoxy novolac resins obtained by reacting, preferably in the presence of a basic catalyst, e.g., sodium or potassium hydroxide, an epihalohydrin, such as epichlorohydrin, with the resinous condensate of an aldehyde, e.g., formaldehyde, and either a monohydric phenol, e.g., phenol itself, or a polyhydric phenol. Further details concerning the nature and preparation of these epoxy novolac resins can be obtained in Lee, H. and Neville, K., Handbook of Epoxy Resins, McGraw Hill Book Co., New York, 1967.

The polyamine curing agents which can be utilized in accordance with the present invention are generally any of those polyamine curing agents which are well-known to be useful for the curing of vicinal epoxides. Generally, those curing agents having at least three reactive amino hydrogens are useful.

Exemplary of those amines which can be utilized are alkylene polyamines, such as diethylene triamine, triethylene tetramine and the like, oxyalkylene polyamines such as polyoxypropylene diamine and triamine and 1,13-diamino-4,7,10-trioxatridecane.

Additionally, aromatic amine curing agents are useful, such as the alkylene-linked polyphenyl amines, phenylene diamines and polycyclic or fused aromatic primary amine compounds. Additionally, the corresponding cycloaliphatic compounds can also be used.

Likewise, the polyamide curing agents such as the condensation products of polyamines and polycarboxylic acids are useful. Suitable amide compounds of this type are, for example, the condensation product of a polyamine and a dimerized fatty acid produced in accordance with US-A-2379413.

Of the amine curing agents known to be effective in curing a vicinal epoxy resin, preferred curing agents for use in accordance with the present invention are the polyoxyalkylene containing amine compounds. A preferred class of polyoxyalkylene polyamines has the formula:

$$[H_2N-(\underset{X}{\underset{|}{C}}H\underset{H}{\underset{|}{C}}HO)_n]_r-Z$$

wherein X is hydrogen, methyl or ethyl; Z is a hydrocarbon group having 2 to 5 carbon atoms forming from 2 to 4 external ether linkages; n is 1 to 15 and r is 2 to 4. The most preferred polyoxyalkylene polyamines are the polyoxypropylene diamines wherein X is methyl, n is 1 to 10, Z is a 1,2-propylene group and r is 2. These polyoxyalkylene polyamines can be prepared by known methods as disclosed in US-A-3236895 and US-A-4654370. The most preferred polyoxyalkylene polyamine is a polyoxypropylene diamine having a molecular weight of about 230.

Another preferred class of polyoxyalkylene polyamines has the formula:

$$Z-[(O\underset{H}{\underset{|}{C}}H-\underset{X}{\underset{|}{C}}H)_nNH(CH_2)_yNH_2]_r$$

wherein X, Z, n and r are defined above and y is 2 or 3. These poly(aminoalkylamino)polyethers are the hydrogenated products of the cyanoalkylated adduct of a polyoxyalkylene polyamine as described. The preparation of the cyanalkylated adducts is described in US-A-3666788.

Examples of preferred alkanolamines useful in the invention include mono-, di- and triethanolamine, hydroxy ethoxyethylamine, N-aminoethylethanolamine, N,N-bis(hydroxypropyl) amine, and N-hydroxyethylamine and the like.

US-A-3654370 describes a process for preparing polyoxyalkylene polyamines of the formula:

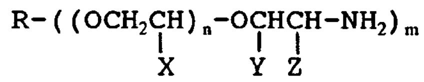

wherein R is the nucleus of an oxyalkylation susceptible polyhydric alcohol having 2 to 12 carbon atoms and 2 to 8 hydroxyl groups, Z is alkyl having 1 to 18 carbon atoms, X and Y are hydrogen or Z, n is 0 to 50 and m is 2 to 8, corresponding to the number of hydroxyl groups in the polyhydric alcohol.

The hindered polyetherpolyamine adhesion enhancer is an aminated, alkyl capped polyol having a molecular weight of at least 2000, preferably from 3000 to 5000. This adhesion enhancer comprises polyetherpolyamines which have been hindered by capping the polyol with a long chain alkyl epoxide group before amination, giving a hindered polyamine. The long chain alkyl group provides steric hindrance to the primary aliphatic amine. This steric hindrance slows down the reactivity of the amine with the vicinal polyepoxide. The slower reactivity of the amine group is useful, since it allows for longer flow times in forming epoxy laminates or coatings.

The hindered amines used according to the present invention may be made according to the following reaction scheme:

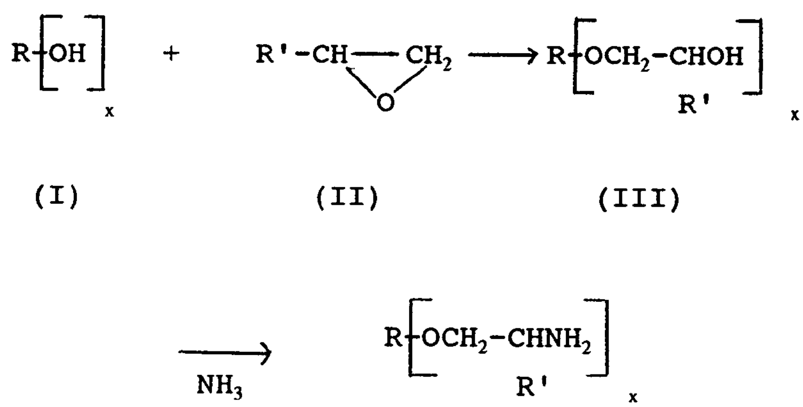


(I) (II) (III)

(IV)

Compound (I) is a polyol, and may be any of the commonly used polyols in the synthesis of polyamine curing agents, as will be further described below. In a preferred embodiment, polyol (I) is first alkoxylated with ethylene oxide, propylene oxide, butylene oxide, or mixtures thereof in block or mixed fashion, according to procedures well known in the art. In this embodiment, the hindered amines have formula (V) as set out below. The alkoxylated branches of the polyol (I) will terminate in hydroxyl groups. The number of hydroxyl terminations, designated by x should be at least two, preferably from 2 to 8, most preferably from 2 to 6.

The long chain alkyl epoxide (II) has a straight or branched alkyl group R' having at least 10 carbon atoms, preferably from 10 to 20 carbon atoms, most preferably from 10 to 16 carbon atoms. In one embodiment, at least one mole of long chain alkyl epoxide (II) is reacted per hydroxyl group present on the polyol (I) to give alkoxylated polyol intermediate (III) which is in turn aminated to give the final hindered polyetherpolyamine (IV). In another embodiment, less than all the hydroxyl groups may be reacted with an equivalent of long chain alkyl epoxide. Somewhat more explicitly, if the prior alkoxylations are represented, the hindered polyetherpolyamine may have the structure (V):

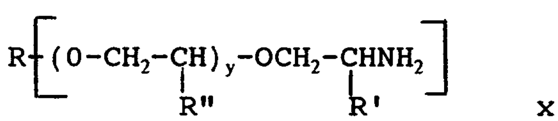

(V)

where R, R', and x are as defined above, R" is alkyl having one or two carbon atoms and y is 20 to 80. In the embodiment whwre less than all the hydroxy groups are reacted with an equivalent of long chain alkyl epoxide, compounds (IV) and (V) are partially hindered. In this event, at least one of the R' groups on the resulting molecule is a straight or branched alkyl group having at least 10 carbon atoms, preferably from 10 to 20 carbon atoms (most preferably 10 to 16 carbon atoms) and the remaining R' groups are hydrogen, methyl or ethyl. In one embodiment, at least half the R' groups are straight or branched alkyl having at least 10 carbon atoms.

The capping of the alkoxylated polyol (I) may be achieved at a temperature of 100 to 150°C without a catalyst. A catalyst, preferably an alkali metal hydroxide, may be present. There is often enough catalyst remaining from the alkoxylation reactions to catalyze the capping. While it is contemplated that substantially all of the hydroxyl groups are capped with the long chain alkyl epoxide, it will be appreciated that a smaller percentage of hydroxyl groups may be reacted with the long chain alkyl epoxide to give only a partially hindered polyetherpolyamine, as described above. At least enough hydroxyl groups should be capped to slow down the reactivity of the polyetherpolyamine, compared to the unhindered version of the same amine; this percentage will be called an effective amount herein. In one embodiment of the invention it is preferred that from 20 to 100% of the hydroxyl groups will be capped with the long chain alkyl epoxide where a preferred range is from 50 to 100%. It will be appreciated that the steric hindrance of the R' group next to the primary amine will reduce its activity somewhat. The slower reactivity of the amine group is useful in forming laminates or coatings, since it allows for longer application time.

The polyhydric alcohols which can be used as initiators for reaction with alkylene oxide, long chain alkyl epoxide and ammonia to provide the hindered polyetherpolyamines used according to the present invention include, but are not limited to, ethylene glycol; propylene glycols; butylene glycols; pentane diols; bis(4-hydroxycyclohexyl)dimethylmethane; 1,4-diemthylolbenzene; glycerol; 2,3,6-hexanetriol; trimethylolpropane; mannitol; sorbitol; erythritol; pentaerythritol; their dimers, trimers and higher polymers, e.g. polyethylene glycols; polypropylene glycols; triglycerol; dipentaerythritol; polyallyl alcohol; and polyhydric thioethers. Meeting the definition of the hindered polyetherpolyamine used in this invention are the hindered polyfunctional amines corresponding to the JEFFAMINE® amines. JEFFAMINE® amines are made by Texaco Chemical Company, and their polyoxyalkylene polyol precursors may be modified to hindered versions by capping them with the long chain alkyl epoxide before the amination step. The precursor polyoxyalkylene polyols for JEFFAMINE® D-2000 and T-5000 amines are examples of polyols which may be aminated to provide modified polyetherpolyamines which will give longer flow times when reacted with polyisocyanates. The alkoxylated initiators useful in the process of this invention preferably have a molecular weight of at least 2000.

The amine cured resins having superior adhesion in accordance with the present invention are prepared in a conventional manner. The amine curing agent combination is mixed with the polyepoxide composition in amounts according to the amine equivalent weight of the curing agent combination employed. Generally, the number of equivalents of amine groups is from 0.8 to 1.2 times the number of epoxide equivalents present in the curable epoxy resin composition, with a stoichiometric amount being preferred. According to the present invention, 2 to 30% by weight of the adhesion enhancer, based on epoxide, are added to the polyamine curing agent to formulate the curative component. When an accelerator is used, amounts from 1 to 15% by weight are generally satisfactory. The exact amount of constituents in accordance with the above general requirements will depend primarily on the application for which the cured resin is intended.

Generally, the mixture of epoxy resin, the polyamine curing agent, hindered polyetheramine adhesion enhancer, and the accelerator combination (when used) is allowed to self-cure at ambient temperatures of 0 to 45°C. Excellent adhesive properties are developed at room temperature, e.g. at about 25°C.

According to a greatly preferred embodiment, resins of the polyglycidal ether of polyhydric phenol type are cured with a stoichiometric amount of diamine or triamine, the adhesion enhancing hindered polyetherpolyamine diamine and from 1 to 10 % by weight based on the epoxide of an accelerator comprising a mixture of piperazine, N-aminoethylpiperazine and triethanolamine. The composition is cured at room temperature to produce products having superior adhesive strength in accordance with the present invention.

It will further be realized that various conveniently employed additives can be mixed with the adhesive composition before final cure. For example, such additives as pigments, dyes, fillers or flame retarding agents may be added to produce a custom formulation for a particular end use.

Furthermore, although not preferred, known solvents for polyepoxide materials, such as toluene, benzene, xylene, dioxane, or ethylene glycol monomethylether can be used to aid their application to flat or curved surfaces in thin films. Polyepoxide resins containing the additives can be used in any of the applications for which polyepoxides are customarily used. The compositions of the present invention can be used as adhesives.

The following Examples illustrate the nature of the present invention.

In Examples 1 and 2 below, adhesion properties were measured on an epoxy resin system cured with polyoxyalkylenediamine (JEFFAMINE® EDR-148) with aminated $C_{16}$-capped polyol (totally capped).

## EXAMPLE 1

| | 1A | 1B | 1C | 1D | 1E |
|---|---|---|---|---|---|
| Formulation: | | | | | |
| Liquid epoxy resin (EEW 185-192) | 100 | 100 | 100 | 100 | 100 |
| JEFFAMINE® EDR-148 | 20 | 20 | 20 | 20 | 20 |
| Accelerator 399 | 5 | 5 | 5 | 5 | 5 |
| Aminated $C_{16}$-Capped Polyol[1] | - | 1 | 2 | 2 | 10 |
| Adhesion Properties:[2] | | | | | |
| Tensile Shear Strength, psi | 1200 | 1400 | 1400 | 1400 | 1800 |
| Tensile Shear Strength, MPa | 8.27 | 9.65 | 9.65 | 9.65 | 12.41 |
| T-peel strength, pli | 2.4 | 2.3 | 2.7 | 6.6 | 6.9 |
| T-peel strength, N/m | 4.2 | 4.0 | 4.7 | 11.6 | 12.1 |

1)Polyol (MW˜3000) totally capped before amination
2)Bond: Al-to-Al; cured 7 days, ˜23°C

According to Example 1, addition of an aminated $C_{16}$- capped polyol (~3000MW) resulted in an enhancement of adhesive properties. Peel strength was particularly enhanced with increased amounts of modified polyol added in the formulation.

**EXAMPLE 2**

| | 1A | 2A | 2B | 2C | 2D |
|---|---|---|---|---|---|
| Formulation: | | | | | |
| Liquid epoxy resin (EEW 185-192) | 100 | 100 | 100 | 100 | 100 |
| JEFFAMINE® EDR-148 | 20 | 20 | 20 | 20 | 20 |
| Accelerator 399 | 5 | 5 | 5 | 5 | 5 |
| Aminated $C_{16}$-Capped (Partially) Polyol[(1)] | - | 1 | 2 | 5 | 10 |
| Adhesion Properties:[(2)] | | | | | |
| Tensile Shear Strength, psi | 1200 | 1600 | 1300 | 2600 | 5000 |
| Tensile Shear Strength, MPa | 8.27 | 11.03 | 8.96 | 17.93 | 34.48 |
| T-peel strength, pli | 2.4 | 1.6 | 1.2 | 2.0 | 4.5 |
| T-peel strength, N/m | 4.2 | 2.8 | 2.1 | 3.5 | 7.9 |

[1)]Polyol (MW˜3000) totally capped before amination
[2)]Bond: Al-to-Al; cured 7 days, ˜23°C

According to Example 2, improvements in adhesion properties were noted with added amounts of modified polyol. In this Example, more improvement was noted in tensile shear strength than with peel strength, but significant improvement was noted with both properties.

In Examples 2 and 3 below, adhesion properties were measured on an epoxy resin system cured with polyoxyalkylenediamine (JEFFAMINE® D-230) with aminated $C_{16}$-capped polyol (totally capped).

## EXAMPLE 3

| | 3A | 3B | 3C | 3D | 3E |
|---|---|---|---|---|---|
| Formulation: | | | | | |
| Liquid epoxy resin (EEW 185-192) | 100 | 100 | 100 | 100 | 100 |
| JEFFAMINE® EDR-148 | 32 | 32 | 32 | 32 | 32 |
| Accelerator 399 | 10 | 10 | 10 | 10 | 10 |
| Aminated $C_{16}$-Capped (Partially) Polyol[1] | - | 2 | 5 | 10 | 20 |
| Adhesion Properties:[2] | | | | | |
| Tensile Shear Strength, psi | 1200 | 1500 | 2700 | 3100 | 3600 |
| Tensile Shear Strength, MPa | 8.27 | 10.34 | 18.62 | 21.37 | 24.82 |
| T-peel strength, pli | 3.1 | 6.2 | 4.6 | 10.2 | 16.5 |
| T-peel strength, N/m | 5.4 | 10.9 | 8.1 | 17.9 | 28.9 |

1) Polyol (MW ~3000) totally capped before amination
2) Bond: Al-to-Al; cured 7 days, ~23°C

In Example 3, adhesion properties were considerably enhanced with addition of small amounts of modified polyol.

**EXAMPLE 4**

| | 3A | 4A | 4B | 4C | 4D |
|---|---|---|---|---|---|
| **Formulation:** | | | | | |
| Liquid epoxy resin (EEW 185-192) | 100 | 100 | 100 | 100 | 100 |
| JEFFAMINE® EDR-148 | 32 | 32 | 32 | 32 | 32 |
| Accelerator 399 | 10 | 10 | 10 | 10 | 10 |
| Aminated $C_{16}$-Capped (Partially) Polyol[1] | - | 2 | 5 | 10 | 20 |
| **Adhesion Properties:**[2] | | | | | |
| Tensile Shear Strength, psi | 1200 | 1600 | 1400 | 2700 | 3000 |
| Tensile Shear Strength, MPa | 8.27 | 11.03 | 9.65 | 18.62 | 20.69 |
| T-peel strength, pli | 3.1 | 4.8 | 7.6 | 17.9 | 26.7 |
| T-peel strength, N/m | 5.4 | 8.4 | 13.3 | 31.3 | 46.8 |

1)Polyol (MW~3000) totally capped before amination
2)Bond: Al-to-Al; cured 7 days, ~23°C

In Example 4, improvements in adhesion properties were noted with added amounts of modified polyol. In this Example, more improvement was noted in tensile shear strength than with peel strength, but significant improvement was noted with both properties.

**EXAMPLE 5**

This Example demonstrates the preparation of a 3000 m.w., glycerin-based triol which was capped with three moles of a $C_{16}$ olefin oxide (Vikalox® 16).

6.8 Kg (fifteen pounds) of a 610 m.w. propylene oxide adduct of glycerin(alkalinity, mg KOH/g 1.7, hydroxyl No. corr., mg KOH/g 25) and 196g of 45% potassium hydroxide were charged to a 40 liter reactor. The reactor was purged with nitrogen and next heated to 105°C with nitrogen purge, and the initiator was dried to a water content of 0.06%, using both vacuum and nitrogen stripping. 17.4 Kg (38.3 lb) of propylene oxide was then added at 105-110°C at 0.4 MPa (50 psig) over three hours. The reaction mixture was digested to an equilibrium pressure, and purged with nitrogen for 30 minutes. 7.7 Kg (16.9 lb) of Vikalox® 16 olefin oxide was then added at 110°-115°C at the rate of 3.6 Kg/h (8.0 lb/h). The reaction mixture was then digested for three hours at 125°C. The alkaline product was neutralized at 95°C by stirring for two hours with 1150g of Magnesol® 30/40 adsorbent added as an aqueous slurry. Di-t-butyl-p-cresol (15.9g) was then added to stabilize the product. The naturalized product was vacuum stripped, to a minimum pressure, nitrogen stripped, and filtered. Properties of the finished product were as follows:

| Properties | |
|---|---|
| Alkalinity, mg KOH/g | 0.005 |
| Hydroxyl no. mg KOH/g | 57.7 |
| Water, wt% | 0.076 |
| pH in 10:6 isopropanol:water | 7.4 |
| Color, Pt-Co | Opaque liquid |
| Sodium, ppm | 0.8 |
| Potassium, ppm | 11.8 |
| Viscosity, ($x10^{-6}m^2/s$) | |
| 77°F (25°C) | 565 |
| 100°F (38°C) | 209 |

**EXAMPLE 6**

A 3000 molecule weight triol that had been capped with a $C_{16}$ alkylene oxide, ammonia and hydrogen were fed to a tubular reactor filled with nickel amination catalyst.

| Reactor Conditions | |
|---|---|
| Polyol feed rate, lb/h (Kg/h) | 0.80 (0.36) |
| Ammonia feed rate, lb/h (Kg/h) | 0.80 (0.36) |
| Hydrogen feed rate, l/h @ 0°C, 1 atm. | 48 |
| Temperature, °C | 210 |
| Reactor Volume, $cm^3$ | 1250 |

The crude reactor effluent was placed in a clean dry kettle and nitrogen stripped to 70°C, then placed under a vacuum of 1.3 kPa (10 mm Hg) and heated at 100°C. It was held at these conditions for 1 hour. The product has the following analysis:

| | |
|---|---|
| Total Acetylatables | 1.09 meq/g |
| Total Amine | 0.975 meg/q |
| Primary Amine | 0.967 meg/q |

**EXAMPLE 7**

This Example demonstrates the preparation of a 5000 m.w., glycerin-initiated triol which was terminated with 1.5 moles of Vikalox® 16 olefin oxide.

4.5 Kg (ten pounds) of a 700 m.w. propylene oxide adduct of glycerin (alkalinity, mg KOH/g 26, hydroxyl No. corr., mg KOH/g 238) and 40.4g of 45% potassium hydroxide were charged to a 40 liter reactor, which was purged with nitrogen. Maintaining a nitrogen purge, the reactor was heated to 110°C and the initiator was dried to a water content of 0.09% using both vacuum and nitrogen stripping. 33.2 Kg (73.2 lb) of propylene oxide was then reacted at 110°-115°C at 1.3 kPa (50 psig) over five hours. The reaction mixture was then digested to an equilibrium pressure, and purged with nitrogen for 30 minutes. 2.5 Kg (5.4 lb) of Vikalox® 16 olefin oxide was then reacted at the rate of 3.6 Kg/h (8.0 lb/h) at 110°-115°C. The reaction mixture was then digested at 125°C for three hours. The alkaline product was neutralized at 95°C by stirring for two hours with 110g of Magnesol® 30/40 adsorbent which was added as an aqueous slurry. Di-t-butyl p-cresol (20g) was then added to stabilize the polyol. The naturalized product was vacuum stripped to a minimum pressure, nitrogen stripped, and filtered. Properties of the finished product were as follows:

| Properties | |
|---|---|
| Acid no. mg KOH/g | 0.004 |
| Hydroxyl no. mg KOH/g | 36.3 |
| Water, wt% | 0.02 |
| pH in 10:6 isopropanol:water | 7.28 |
| Color, Pt-Co | Hazy liquid |
| Sodium, ppm | 0.7 |
| Potassium, ppm | 1.2 |
| Viscosity (x$10^{-6}$$m^2$/s) | |
| 77°F (25°C) | 792 |
| 100°F (38°C) | 396 |

**EXAMPLE 8**

A 5000 molecular weight triol partially capped with a $C_{16}$ olefin oxide, ammonia and hydrogen were fed to a continuous reactor filled with nickel amination catalyst. The reaction conditions were:

| | |
|---|---|
| Polyol feed rate, lb/h | 0.50 |
| Ammonia feed rate, lb/h | 0.50 |
| Hydrogen, l/h @ 0°C, 0.1 MPa | 35 |
| Temperature, °C | 215 |
| Reactor volume, $cm^3$ | 1250 |

The reactor effluent was charged to a clean dry kettle with nitrogen stripping. It was then placed under 800 kPa (6 mm Hg) vacuum and heated to 100°C for 1 hour. The product had the following analysis:

| | |
|---|---|
| Total Acetylatables | 0.68 meq/g |
| Total Amine | 0.622 meg/q |
| Primary Amine | 0.615 meg/q |

| TABLE OF TEST METHODS | |
|---|---|
| T-peel strength (pli and N/m) | ASTM D-1876 |
| Tensile shear strength (psi and MPa) | ASTM D-1002 |

**TABLE OF MATERIALS**

The nickel amination catalyst used was according to US-A-3654370.

JEFFAMINE® D,-230, D-400 and D-2000 have the structure:

$$H_2NCH(CH_3)CH_2\text{-}[OCH_2CH((CH_3)]_xNH_2$$

wherein:

| JEFFAMINE® | x(approx.) |
|---|---|
| D-2000 | 33.1 |
| D-400 | 5.6 |
| D-230 | 2.6 |

JEFFAMINE® T-403 is represented by the structure:

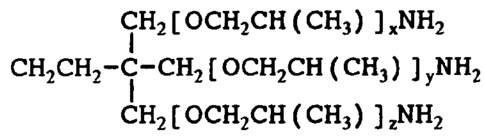

wherein x + y + z is 3 to 6.

The use of these amines as epoxy resin curing agents is described in US-A-4189564.

JEFFAMINE® T-5000 is a partially aminated polyol having 0.55 meq/g total acetylatables, a total amine content of 0.48 meq/g, and a primary amine content of 0.43 meq/g.

Accelerator 399 is a blend of 10-20% piperazine, 5-10% N-aminoethylpiperazine and 65-80% triethanolamine.

JEFFAMINE® EDR-148 is triethyleneglycol diamine.

JEFFAMINE® EDR-192 is tetraethyleneglycol diamine.

## Claims

1. A curable epoxy resin component comprising
   A. An epoxy resin component comprising a vicinal polyepoxide having an average of at least 1.8 reactive 1,2-epoxy groups per molecule; and
   B. A curative component comprising a polyamine curing agent
   characterised in that the curative component also includes 2 to 30 % by weight, based on vicinal polyepoxide of a hindered polyetherpolyamine adhesion enhancer obtainable by reacting a polyol having two or more hydroxyl groups with an effective amount of a long chain alkyl epoxide to give an at least partially hindered intermediate having hydroxyl terminations; and
   aminating at least one of the hydroxyl terminations on the intermediate to primary amino groups.

2. A composition according to Claim 1 characterised in that the hindered polyetherpolyamine has the structure:

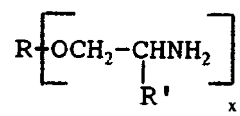

or

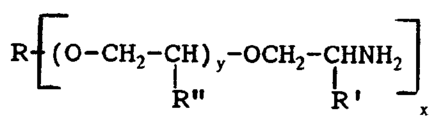

wherein R is a central moiety from a polyol; at least one R' is a straight or branched alkyl group having at least 10 carbon atoms, the balance being hydrogen, methyl or ethyl; R" is hydrogen or an alkyl group having 1 or 2 carbon atoms; x is 2 or more and y is 20 to 80.

3. A composition according to Claim 1 or 2 characterised in that hindered polyetherpolyamine has a molecular weight of 2000 or greater.

4. A composition according to any one of Claims 1 to 3 characterised in that the polyamine curing agent has the formula:

$$H_2NCH(CH_3)CH_2\text{-}[OCH_2CH(CH_3)]_zNH_2$$

wherein z is 2 to 40.

5. A composition according to any one of Claims 1 to 3 characterised in that the polyamine curing agent has the formula:

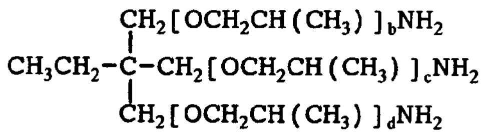

wherein the sum of b, c and d is 3 to 6.

6. A composition according to any one of Claims 1 to 3 characterised in that the polyamine curing agent is diethyleneglycol diamine, triethyleneglycol diamine or tetraethyleneglycol diamine.

7. A composition according to any one of Claims 1 to 6 characterised by including 1 to 10 % by weight, based on epoxy resin, an accelerator composition comprising a mixture of piperazine, N-aminoethylpiperazine and triethanolamine.

8. A cured epoxy resin obtained by curing a curable composition according to any one of Claims 1 to 7.

9. A cured epoxy resin according to Claim 8 characterised in that the curable composition is cured at a temperature of 0 to 45°C.

European Patent Office

# EUROPEAN SEARCH REPORT

Application Number

EP 93 30 3924

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 185 239 (JEFFERSON)<br>* Claims; page 3, lines 1-29; example XI * | 1-7 | C 09 J 163/00<br>C 08 G 65/32 |
| Y | | 1,4-7 | |
| Y | EP-A-0 434 214 (TEXACO)<br>* Claims; page 4, lines 31-34 * | 1,4-7 | |
| | | | TECHNICAL FIELDS SEARCHED (Int. Cl.5) |
| | | | C 08 L<br>C 09 J |

The present search report has been drawn up for all claims

| Place of search | Date of completion of the search | Examiner |
|---|---|---|
| THE HAGUE | 23-09-1993 | DERAEDT G R C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)